# EUROPÄISCHE PATENTSCHRIFT

(11) **EP 3 928 056 B1**
(45) Veröffentlichungstag und Bekanntmachung des Hinweises auf die Patenterteilung: **13.09.2023**
(21) Anmeldenummer: 20706210.0
(22) Anmeldetag: 18.02.2020
(51) Int. Cl.: G01B 11/00, G06Q 50/08, G06Q 10/06

(54) **COMPUTERIMPLEMENTIERTES VERFAHREN, COMPUTERPROGRAMMPRODUKT UND SYSTEM ZUM BESTIMMEN VON INSTALLATIONSDATEN BETREFFEND DIE LAGE ZUMINDEST EINER ZU INSTALLIERENDEN WASSERTECHNISCHEN EINRICHTUNG**
COMPUTER-IMPLEMENTED METHOD, COMPUTER PROGRAM PRODUCT AND SYSTEM FOR DETERMINING INSTALLATION DATA RELATING TO THE POSITION OF AT LEAST ONE WATER ENGINEERING FACILITY TO BE INSTALLED
PROCÉDÉ IMPLÉMENTABLE PAR ORDINATEUR, PRODUIT PROGRAMME D'ORDINATEUR ET SYSTÈME POUR DÉTERMINER DES DONNÉES D'INSTALLATION CONCERNANT L'EMPLACEMENT D'AU MOINS UN DISPOSITIF HYDROTECHNIQUE À INSTALLER

(30) Priorität: 19.02.2019 DE 102019104172
(43) Veröffentlichungstag der Anmeldung: 29.12.2021
(73) Patentinhaber: ACO Ahlmann SE & Co. KG, 24782 Büdelsdorf (DE)
(72) Erfinder:
(74) Vertreter: Meissner Bolte Partnerschaft mbB
(86) Internationale Anmeldenummer: PCT/EP2020/054210
(87) Internationale Veröffentlichungsnummer: WO 2020/169585

(56) Entgegenhaltungen:
- DE-A1-102017 115 414
- JP-A- 2012 175 665
- US-A1- 2015 269 760

## Beschreibung

Die Erfindung betrifft ein computerimplementiertes Verfahren, ein Computerprogrammprodukt und ein System zum Bestimmen von Installationsdaten betreffend die Lage zumindest einer zu installierenden wassertechnischen Einrichtung.

Im Bereich der Bauindustrie besteht die Schwierigkeit, insbesondere die Lage und den Verlauf von zu installierenden wassertechnischen Einrichtungen, wie etwa von wasserführenden Rohren oder Leitungen, von offenen oder geschlossenen Entwässerungseinrichtungen, insbesondere von Abwasserrohren, Entwässerungsrohren, Fallrohren, Entwässerungsrinnen, Geruchsverschlüssen (Siphons) oder Drainagen, angepasst an die örtlichen Begebenheiten korrekt zu planen und anschließend die Installation auch plangemäß umzusetzen. Diese Schwierigkeiten sind zumindest zum Teil der Tatsache geschuldet, dass zum Planen der Installation typischerweise anderes Personal zum Einsatz kommt, als bei der Umsetzung der Installation. Beim Vermessen der Einbauorte bzw. Installationspositionen für die wassertechnische Einrichtung kann es beispielsweise vorkommen, dass das mit der Planung betraute Personal gänzlich andere Messtechniken einsetzt als das Personal, welches mit der eigentlichen Installation der wassertechnischen Einrichtung betraut ist. Daraus können große Abweichungen hinsichtlich der gemessenen Lage der Einbauposition resultieren, zumal unterschiedliche Messtechniken, wie etwa die direkte Messung mittels Maßband oder eine optische Messtechnik, die beispielsweise auf Lasertechnik beruht, typischerweise mit unterschiedlich großen durchschnittlichen Fehlerabweichungen behaftet sind. Mögliche weitere Fehlerquellen sind unsachgemäß oder ungenau durchgeführte Messungen oder Übertragungsfehler beim Kommunizieren (Telefon, E-Mail) der zum Einbau notwendigen Informationen zwischen den mit der Installation betrauten Personen bzw. Personengruppen.

Derartige Fehler können dazu führen, dass beispielsweise Rohre, Leitungen oder Rinnen mit falschen Abmessungen bestellt werden. In anderen Fällen kann es vorkommen, dass beispielsweise eine fehlerhaft gesetzte Bohrung, wie etwa eine Öffnung für ablaufendes Wasser in einer Großküche, nachträglich hinsichtlich ihrer Position und/oder Dimensionierung aufwändig angepasst werden muss. Dies kann beispielsweise dazu führen, dass der Boden nochmals geöffnet werden muss, um die bereits gesetzte Öffnung auf andere Maße abzustimmen, was mit beträchtlichen Zusatzkosten einhergehen kann.

DE 10 2017 115414 A1 beschreibt ein Verfahren zur Visualisierung eines Raummodells, insbesondere für die Einrichtungsplanung mit den folgenden Schritten: Aufbringen mehrerer Markierungselemente an einer Wand und/oder einem Boden eines Raumes; Digitales Erfassen des Raumes mit den Markierungselementen; Umwandeln zumindest eines Teils der digital erfassten Markierungselemente in Einrichtungsgegenstände, wobei unterschiedliche Markierungselemente zur Darstellung unterschiedlicher Einrichtungsgegenstände führen, und Darstellen des Raumes mit den Einrichtungsgegenständen an einer Anzeigevorrichtung.

JP 2012 175665 A bezieht sich auf ein Bildzusammensetzungsverfahren mit folgenden Schritten:
Einen Speicherschritt für tatsächliche Bilder zum Fotografieren des Objekts einschließlich des Positionsinformationsobjekts mit Positionsinformationen, die an dem Objekt bereitgestellt werden und die eigene Position zeigen, und des identifizierenden Objekts, das aus dem fotografierten tatsächlichen Bild identifiziert und gespeichert werden kann Bilddaten, die das fotografierte tatsächliche Bild bilden;
einen Identifikationsobjektinformationsspeicherschritt zum Berechnen einer relativen Position zwischen Informationsidentifikationen des Identifikationsobjekts zu dem Positionsinformationsobjekt basierend auf den Bilddaten und zum Speichern der Identifikationsobjektinformationen, in denen die berechnete relative Position zwischen den Informationsidentifikationen und dem Identifikationsobjekt ist miteinander verbunden sind; und
einen Bildzusammensetzungsschritt, in dem beim Fotografieren des Objekts, das das Informationsobjekt nicht enthält und das Identifizierungsobjekt enthält, das auf der Grundlage der Identifizierungsobjektinformationen fotografierte tatsächliche Bild und das im Voraus erzeugte virtuelle Bild miteinander zusammengesetzt werden.

Es ist Aufgabe der Erfindung, durch menschliches Versagen verursachte Fehler bei der Installation von wassertechnischen Einrichtungen zumindest einzuschränken bzw. im Idealfall weitgehend auszuschließen.

Diese Aufgabe wird gelöst durch ein computerimplementiertes Verfahren zum Bestimmen von Installationsdaten betreffend die Lage zumindest einer zu installierenden wassertechnischen Einrichtung mit den Merkmalen des Anspruchs 1, einem Computerprogrammprodukt mit den Merkmalen des Anspruchs 7 und einem System zum Bestimmen von Installationsdaten betreffend die Lage zumindest der zu installierenden wassertechnischen Einrichtung mit den Merkmalen des Anspruchs 8.

Vorteilhafte Ausgestaltungen der Erfindung sind Gegenstand der Unteransprüche.

Ein computerimplementiertes Verfahren zum Bestimmen von Installationsdaten betreffend die Lage zumindest einer zu installierenden wassertechnischen Einrichtung, umfasst zumindest die folgenden Schritte:
- Einlesen von optischen Bilddaten, wobei in den eingelesenen Bilddaten zumindest eine Position eines optisch codierten Markers, insbesondere zwei Positionen optisch codierter Marker, im Raum erfasst ist bzw. sind;
- Zuordnen der von dem zumindest einen optisch codierten Marker codierten Information anhand der eingelesenen Bilddaten derart, dass die Position des zumindest einen optisch codierten Markers einer Installationsposition insbesondere der zumindest einen zu installierenden wassertechnischen Einrichtung zugeordnet wird;
- Auswerten der eingelesenen Bilddaten unter Berücksichtigung der dem zumindest einen optisch codierten Marker zugeordneten Information;
- Ermitteln von Installationsdaten anhand der Auswertung der Bilddaten, wobei die Installationsdaten Lage, Typ, Ausführung und Abmessungen der zumindest einen zu installierenden wassertechnischen Einrichtung charakterisieren;
- Bereitstellen der Installationsdaten, insbesondere über eine Schnittstelle.

Insbesondere vor dem Einlesen der optischen Bilddaten können beispielsweise die die Marker vor der Messung ausgedruckt und ausgelegt werden.

Beim Auswerten der Bilddaten kann insbesondere der Abstand der verwendeten optischen Erfassungseinheit, insbesondere eines Mobilgeräts, zu den ausgelegten Markern mit Hilfe der bekannten Größe der Marker im Vergleich zur Größe ihrer Abbilder ermittelt werden.

Beim Auswerten der Bilddaten kann insbesondere eine rechnerische Ermittlung der relativen Lage der Marker verwendeten optischen Erfassungseinheit anhand der optischen Verzerrung der Abbilder der beiden Marker erfolgen.

Beim Auswerten der Bilddaten kann insbesondere eine rechnerische Ermittlung der relativen Lage der Marker erfolgen.

Zur Auswertung der Bilddaten kann insbesondere die optische Erfassungseinheit eines Mobilgerätes in Richtung eines ausgelegten Markers derart bewegt werden, dass, mehrere Marker im Erfassungsbereich der optischen Erfassungseinheit liegen oder ein zusätzlicher Marker erfasst wird.

Bei Erfassung eines weiteren bzw. zusätzlichen Markers können diese Verfahrensschritte insbesondere für den neu erfassten Marker oder die neu erfassten Marker wiederholt werden, d.h. die aktualisierten Bilddaten werden eingelesen, die relative Lage der erfassten Marker zur optischen Erfassungseinheit werden insbesondere anhand der optischen Verzerrung der Abbilder der beiden Marker rechnerisch ermittelt und die relative Lage der erfassten Marker wird insbesondere rechnerisch ermittelt.

Daraufhin kann der Erfassungsbereich der optische Erfassungseinheit weiterbewegt werden, um gegebenenfalls weiter Marker zu erfassen, bis alle Marker erfasst und hinsichtlich ihrer Lage gemäß den beschriebenen Verfahrensschritten ausgewertet worden sind. Abschießend kann insbesondere die Positionen der Marker durch ihre relative Lage zueinander berechnet werden.

Eine wassertechnische Einrichtung im Sinne der vorliegenden Spezifikation ist beispielsweise ein wasserführendes Rohr oder eine wasserführende Leitung, Rinne oder dergleichen. Eine wasserführende Einrichtung ist insbesondere eine offene oder geschlossene Entwässerungseinrichtung, insbesondere ein Abwasserrohr, ein Entwässerungsrohr, ein Fallrohr, eine Entwässerungsrinne, ein Geruchsverschluss (Siphon) oder eine Drainage.

Es ist auch möglich, das erfindungsgemäße Verfahren zur Lösung von Messaufgaben aus den Bereichen Hochbau, Innenausbau, technische Gebäudeausrüstung, Tiefbau, Bergbau, Straßenbau, Gleisbau, Wasserbau, Einrichtungsplanung und Forensik zu verwenden. Die Aufzählung ist nicht abschließend.

Das computerimplementierte Verfahren dient insbesondere dazu, zwischenmenschliche Fehler bei der Installation von wassertechnischen Einrichtungen zu vermeiden. Hierzu wird insbesondere die Kommunikation zwischen den mit der Planung und Installation betrauten Personen vereinheitlicht, insbesondere derart, dass nach Möglichkeit die Verwendung von zusätzlicher Kommunikationskanäle, wie etwa E-Mail oder Telefon, zur Kommunikation der zum Einbau der wassertechnischen Einrichtung relevanten Information unnötig ist. Die Messtechnik zur Festlegung der Installationspositionen ist vereinheitlicht und beruht auf der optischen Erfassung die zuvor platzierten Marker. Das computerimplementierte Verfahren ermöglicht eine automatische Überprüfung der eingelesenen Bilddaten dahingehend, ob diese zur Ermittlung von Installationsdaten, die den Einbau der wassertechnischen Einrichtung hinreichend charakterisieren, geeignet sind. Die Installationsdaten werden über eine geeignete Schnittstelle, vorzugsweise über mehrere geeignete Schnittstellen zur Verfügung gestellt, so dass diese beispielsweise von einer Person, die mit dem Einbau der wasserführenden Einrichtung betraut ist, abgerufen werden können. In anderen Fällen werden die Installationsdaten einem Produktmanagementsystem zur Verfügung gestellt. Zur Bereitstellung derartiger Installationsdaten kommen prinzipiell alle gängigen, insbesondere alle gängigen drahtlosen oder drahtgebundenen Schnittstellen und Übertragungsprotokolle in Betracht.

Die Installationsposition der zumindest einen zu installierenden wassertechnischen Einrichtung kann beispielsweise bezüglich eines markanten Bereichs, insbesondere bezüglich einer Lage eines Bauelements, das in den Bilddaten erfasst ist und einen Bezugspunkt bildet, festgelegt werden.

In Ausgestaltungen des computerimplementierten Verfahrens sind in den eingelesenen Bilddaten Positionen von mehreren optisch codierten Markern im Raum erfasst. Beim Zuordnen der codierten Information wird die Position zumindest eines weiteren optisch codierten Markers einer weiteren Installationsposition der zumindest einen zu installierenden wassertechnischen Einrichtung zugeordnet. Alternativ dazu kann die Position des zumindest einen weiteren optisch codierten Markers einer Bezugsposition (z. B. Wand) im Raum zugeordnet werden. Durch die Verwendung und Auswertung einer Vielzahl von unterschiedlichen Markern können komplexe Situationen zuverlässig geplant werden und insbesondere die korrekte Lage und Ausrichtung der zu installierenden wassertechnischen Einrichtung präzise, beispielsweise relativ zu mehreren Landmarken (Bezugspunkten), vorgegeben werden.

In Ausgestaltungen des computerimplementierten Verfahrens erfolgt das Zuordnen der codierten Information unter Anwendung von Bilderkennung, insbesondere unter zumindest teilweiser Segmentierung der eingelesenen Bilddaten. Dementsprechend erfolgt vorzugsweise eine automatische Erkennung von Bildbereichen, die Marker mit optisch codierter Information (insbesondere Muster) zeigen. Die optisch codierte Information kann beispielsweise zugeordnete Arbeiten, das einzubauende Bauteil oder andere relevante Parameter oder Größen kodieren.

In Ausgestaltungen des computerimplementierten Verfahrens charakterisieren die ermittelten Installationsdaten zumindest eine vorläufige Lage der zumindest einen zu installierenden wassertechnischen Einrichtung. Diese ermittelten Installationsdaten werden insbesondere zur Ausgabe auf einer Anzeigeeinheit, insbesondere Display, insbesondere über die bereits genannte Schnittstelle, bereitgestellt. Hierzu wird beispielsweise in den zuvor erfassten Bilddaten die Lage der zu installierenden wassertechnischen Einrichtung eingeblendet.

In Ausgestaltungen des computerimplementierten Verfahrens werden zusätzlich zu den optischen Bilddaten Einbauparameter, insbesondere benutzerseitig vorgegebene Einbauparameter, eingelesen. Derartige Einbauparameter können beispielsweise den Ort der entsprechenden Baustelle via GPS charakterisieren. In anderen Fällen betreffen die Einbauparameter den Typ der einzubauenden wassertechnischen Einrichtung und/oder deren Maße bzw. Dimensionierung. Das Auswerten der eingelesenen Bilddaten erfolgt unter Berücksichtigung der Einbauparameter und eines Planungsmodells dergestalt, dass die eingelesenen Bilddaten und/oder die Einbauparameter anhand des Planungsmodells auf Korrektheit und/oder Vollständigkeit überprüft werden.

In Weiterbildung des computerimplementierten Verfahrens ist im Falle von fehlenden und/oder inkorrekten Informationen vorgesehen, korrigierte Bilddaten und/oder korrigierte Einbauparameter und/oder zusätzliche spezifizierte Einbauparameter anzufordern und anschließend einzulesen. Die Aufforderung zur Korrektur bzw. zur Vervollständigung der fehlenden Daten kann in Ausgestaltungen alternativlos erfolgen, um einen vorgegebenen Qualitätsstandard, der beispielsweise durch das bereits genannte Planungsmodell bestimmt ist, sicherzustellen.

Die Erfindung betrifft ferner ein Computerprogrammprodukt mit einem computerlesbaren Speichermedium, welches Instruktionen enthält, die, wenn diese von einer Rechnereinheit ausgeführt werden, die Durchführung des vorstehend beschriebenen computerimplementierten Verfahrens bewirkt.

Die Erfindung betrifft ferner ein System zum Bestimmen von Installationsdaten betreffend die Lage zumindest einer zu installierenden wassertechnischen Einrichtung, welches zumindest eine Rechnereinheit mit dem bereits genannten Computerprogrammprodukt, zumindest einen optisch kodierten Marker und eine optische Erfassungseinheit, insbesondere eines Mobilgeräts umfasst. Die optische Erfassungseinheit ist zum Erfassen der Lage des zumindest einen optisch codierten Markers im Raum ausgebildet. Das System vereinheitlicht die zur Installation der wassertechnischen Einrichtung durchzuführenden Messungen zumindest zum Teil und vereinfacht die Kommunikation zwischen den mit dem Einbau befassten Personen erheblich. Zudem wird ermöglicht, relevante Daten, insbesondere Installationsdaten, zur Einpflege in ein Produktmanagementsystem automatisch bereitzustellen.

Als Mobilgerät im engeren Sinne wird im Rahmen dieser Spezifizierung insbesondere ein Mobiltelefon, Notebook, Laptop oder Tablet angesehen.

In Ausgestaltungen ist eine Benutzerschnittstelle zur benutzerseitigen Kommunikation mit der Rechnereinheit, beispielsweise zum Vorgeben, Ergänzen und gegebenenfalls Korrigieren von Eingabeparametern, vorgesehen. Die Benutzerschnittstelle kann insbesondere als berührungssensitive Oberfläche eines Mobilgeräts realisiert sein.

In Ausgestaltungen umfasst das System eine Anzeigeeinheit, insbesondere ein Display eines Mobilgeräts, die beispielsweise zum Anzeigen der vorläufigen Lage der zumindest einen zu installierenden wassertechnischen Einrichtung geeignet ist und zum Übertragen der entsprechenden Daten in Kommunikation, insbesondere über die vorstehend bereits genannte Schnittstelle, mit der Rechnereinheit steht.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Es zeigen
- FIG. 1: eine Einbaustelle für eine zu installierende wassertechnische Einrichtung in einer schematischen Draufsicht;
- FIG. 2: ein Verfahren zum Bestimmen von Installationsdaten betreffend die Lage zumindest einer zu installierenden wassertechnischen Einrichtung in einem schematischen Ablaufdiagramm.

Einander entsprechende Teile und Komponenten sind in allen Figuren mit den gleichen Bezugszeichen versehen.

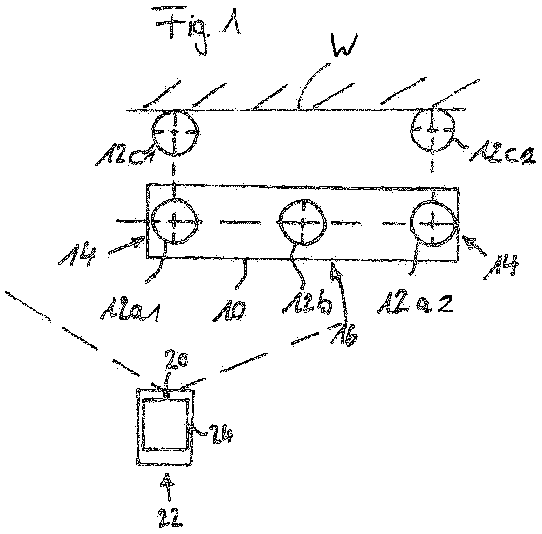

FIG 1 zeigt schematisch eine typische Einbaustelle für eine wassertechnische Einrichtung 10 in oder an einem Gebäude in einer Draufsicht. Konkret ist in FIG. 1 eine Situation dargestellt, in der die als Entwässerungsrinne ausgeführte wassertechnische Einrichtung 10 parallel zu einer Wand W verlegt werden soll. Hierzu markiert eine mit der Installation der wassertechnischen Einrichtung 10 betraute Person die (Soll)-Lage und (Soll)-Ausrichtung der zu installierenden wassertechnischen Einrichtung 10 und die Lage und Ausrichtung der Wand W mit optisch codierten Markern 12a1, 12a2, 12b, 12c1 und 12c2. Die Gesamtsituation wird anschließend mittels einer optischen Erfassungseinheit 20, insbesondere Kamera, erfasst. Die Erfassungseinheit 20 ist hier eine Kamera eines Mobilgeräts 22. In diesem Zusammenhang können insbesondere handelsübliche Mobilgeräte 22, wie etwa Mobiltelefone oder Tablets, zum Einsatz kommen, die üblicher Weise mit Kameras ausgestattet sind, die zur optischen Erfassung derartiger Situationen geeignet sind.

Das Mobilgerät 22 weist ferner eine Anzeigeeinheit 24 (Display), welches dazu ausgebildet ist Bilddaten, insbesondere Bilddaten, die von der optischen Erfassungseinheit 20 erfasst werden oder erfasst worden sind, optisch auszugeben.

Zur optischen Codierung der Marker 12a1, 12a2, 12b, 12c1, 12c2 sind diese mit unterschiedlichen Mustern versehen, die in der Draufsicht der FIG. 1 sichtbar und somit auch in den mittels der optischen Erfassungseinheit 20 aufgenommenen Bilddaten beinhaltet sind. Das jeweilige Muster der optisch codierten Marker 12a1, 12a2, 12b, 12c1, 12a2 ist eindeutig dem jeweiligen Objekt bzw. dessen Funktion zugeordnet, so dass insbesondere die optisch codierten Marker 12a1 und 12a2, welche die Lagen (Installationspositionen) von Endstücken 14 der zu installierenden wassertechnischen Einrichtung 10 markieren, ein anderes Muster aufweisen, als der optisch codierte Marker 12b, welcher die Lage (Installationsposition) eines Zwischenstücks 16 der zu installierenden wassertechnischen Einrichtung 10 markiert. Die optisch codierten Marker 12c, welche die Lage und Ausrichtung der Wand W charakterisieren, weisen wiederrum ein anderes Muster auf als die Marker 12a1, 12a2, 12b.

Es versteht sich, dass die dargestellte Situation, insbesondere hinsichtlich der Lage und Orientierung der wassertechnischen Einrichtung 10, lediglich exemplarisch und nicht einschränkend aufzufassen ist. Es ist vorgesehen, eine Vielzahl von verschiedenen optisch codierten Marker 12 zur Kennzeichnung der Lage von unterschiedlichen Objekten und/oder zur Kennzeichnung von Positionen für durchzuführende Arbeiten, wie beispielsweise das Einbringen von Öffnungen, Kernbohrungen oder dergleichen, vorzusehen. Insbesondere kann es vorteilhaft sein, die Lage bzw. den Verlauf der zu installierenden wassertechnischen Einrichtung 10 mit Hilfe einer Vielzahl von optischen Markern 12 genau festzulegen.

Die mittels der optischen Erfassungseinheit 20 erfassten Bilddaten werden zur weiteren Verarbeitung und Auswertung von einer (nicht näher dargestellten) Rechnereinheit eingelesen. Das nachfolgend beschriebene computerimplementierte Verfahren kann in Ausgestaltungen auf einer lokalen Rechnereinheit, beispielsweise auf einem lokalen Computer, Laptop oder auf dem vorstehend bereits genannten Mobilgerät 22 implementiert sein. In anderen Ausgestaltungen ist das computerimplementierte Verfahren nicht-lokal auf einer Recheneinheit oder auf mehreren Recheneinheiten, insbesondere eines Remote-Netzwerks oder einer Cloud, installiert. In diesem Fall kann insbesondere vorgesehen sein, die erfassten Bilddaten mittels des vorstehend beschriebenen Mobilgeräts 22 an die nicht-lokale Recheneinheit oder Recheneinheiten zu übertragen. Gegebenenfalls können bei der computerimplementierten Auswertung zur Ermittlung von Installationsdaten zusätzlich benutzerseitig eingegebene Einbauparameter, die beispielsweise Typ und Abmessungen der zu installierenden wassertechnischen Einrichtung 10 oder den Einbauort (GPS) spezifizieren und von der mit der Planung der Installation betrauten Person vorgegeben werden, berücksichtigt werden. Insbesondere kann der Installationsort durch eine Standortabfrage des Mobilgeräts 22 als Einbauparameter definiert werden. Die insbesondere benutzerseitig spezifizierten Einbauparameter werden entsprechend zusätzlich zu den Bilddaten von der lokalen oder nicht-lokalen Rechnereinheit eingelesen. Die benutzerseitige Spezifizierung derartiger Informationen kann insbesondere mit Hilfe einer geeigneten Mensch-Maschine Schnittstelle, wie etwa einer Tastatur oder eines anderen Eingabemittels, wie etwa einer berührungssensitiven Oberfläche (z. B. Touchscreen), insbesondere des vorstehend genannten Mobilgeräts 22, erfolgen.

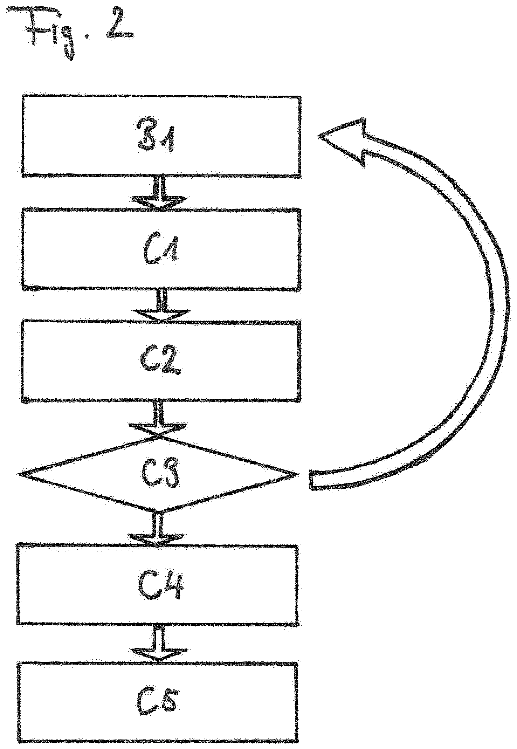

FIG. 2 illustriert schematisch den Ablauf des computerimplementierten Verfahrens zum Bestimmen von Installationsdaten betreffend die Lage zumindest einer zu installierenden wassertechnischen Einrichtung 10. Schritt B1 bezeichnet die bereits beschriebene benutzerseitige Erfassung der Bilddaten bzw. die zusätzlich benutzerseitig vorgegebenen Einbauparameter. Die computerimplementierten Schritte sind mit C1 bis C5 bezeichnet.

Im Schritt B1 werden beispielsweise die Marker 12a1, 12a2, 12c1, 12c2,12b vor der Messung ausgedruckt, ausgelegt und zumindest zum Teil hinsichtlich ihrer Lage erfasst.

Im Schritt C1 werden die mittels der optischen Erfassungseinheit 20 erfassten optischen Bilddaten und die gegebenenfalls zusätzlich spezifizierte benutzerseitige Informationen (Einbauparameter) seitens der Recheneinheit eingelesen.

Im Schritt C2 erfolgt die Zuordnung der von den optischen Markern 12 codierten Information mit Hilfe von Bildauswertungsalgorithmen. In Ausgestaltungen erfolgt diese Zuordnung bzw. Decodierung unter Zuhilfenahme von Bild- und/oder Mustererkennung. Bei vorteilhaften Ausgestaltungen beinhaltet der zur Bilderkennung eingesetzte Algorithmus die zumindest bereichs- bzw. teilweise Segmentierung der eingelesenen Bilddaten, insbesondere im Bereich der Marker 12. Die Dekodierung der von den optisch codierten Markern 12 codierten Information kann insbesondere einen Datenbankabgleich beinhalten.

Mit Bezug auf die in FIG. 1 gezeigte Einbausituation werden im Schritt C2 beispielsweise die Marker 12a1 mit Endstücken der zu installierenden wassertechnischen Einrichtung 10 und der Marker 12b mit einem Zwischenstück der zu installierenden wassertechnischen Einrichtung 10 identifiziert. Entsprechend werden die Marker 12c mir der Wand W in Verbindung gebracht. Auf diese Weise werden mit den Positionen der Marker 12c1 Bezugspunkte für den Einbau der wassertechnischen Einrichtung 10 festgelegt.

Die durch die Marker 12 optisch codierte Information kann insbesondere die zu installierenden wassertechnischen Einrichtung 10 zumindest zum Teil, wie beispielsweise hinsichtlich ihres Typs, spezifizieren. Derartige Informationen können insbesondere durch benutzerseitig vorgegebene und eingelesene Einbauparameter ergänzt und weiter spezifiziert werden.

Im Schritt C3 erfolgt eine Auswertung der eingelesenen Bilddaten und der bereits spezifizierten Einbauparameter unter Berücksichtigung eines Planungsmodells.

Hierbei wird die Gesamtheit der eingelesenen Daten (Bilddaten und Einbauparameter) beispielsweise anhand des Planungsmodells dahingehend analysiert, ob die verfügbaren Informationen eine valide Einbausituation beschreiben können und/oder ob diese Informationen für die nachfolgende Installation der wassertechnischen Einrichtung 10 hinreichend sind. Hierbei kann insbesondere vorgesehen sein, die eingelesenen Bilddaten dahingehend zu analysieren, ob die Positionen der Marker 12a, b, die die (Soll-) Lage der wassertechnischen Einrichtung 10 spezifizieren, kompatibel sind mit der geometrischen Gestalt und mit den Abmessungen der zu installierenden wassertechnischen Einrichtung 10. Die Auswertung kann insbesondere unter Berücksichtigung des Abbildungsmaßstabs der verwendeten optischen Erfassungseinheit 20 erfolgen.

Sollte die Auswertung im Schritt C4 ergeben, dass die eingelesenen Daten (Bilddaten und Einbauparameter) vollständig und korrekt sind, so wird mit Schritt C5 fortgefahren, in dem die den Einbau bzw. die Installation charakterisierenden Installationsdaten ermittelt werden. Sollte die Auswertung im Schritt C4 ergeben, dass die eingelesenen Daten (Bilddaten und Einbauparameter) unvollständig oder inkorrekt sind, so wird die mit der Planung der Installation betraute Person über eine Kommunikationsschnittstelle, beispielsweise über das bereits genannte Mobilgerät 22, zur Korrektur und/oder zum Ergänzen der Daten aufgefordert. Die ergänzten und/oder korrigierten Einbauparameter bzw. die ergänzten und/oder korrigierten Bilddaten werden somit in einem zusätzlichen Schritt B1 erfasst bzw. spezifiziert und anschließen seitens der Recheneinheit nochmals (Schritt C1) eingelesen. Hierzu ist in einer bevorzugten Ausgestaltung vorgesehen, dass die Aufforderung zur Korrektur bzw. zum Ergänzen der fehlerhaften bzw. unvollständigen Daten alternativlos ist, um den Qualitätsstandard sicherzustellen. Gegebenenfalls wird die mit der Planung der Installation betraute Person mehrmals dazu aufgefordert, fehlerhafte bzw. unvollständige Informationen oder Daten zu korrigieren oder zu ergänzen. Das zugrundeliegende Planungsmodel spezifiziert hierzu in Ausgestaltungen den Installationsprozess vorzugsweise zumindest zu Teil mit Hinblick auf Fertigung, Angebotserstellung, anzufertigende Zeichnungen und/oder durchzuführende Kalkulationen.

Im Schritt C4 werden die Installationsdaten ermittelt, die im Wesentlichen den gesamten Einbau der wassertechnischen Einrichtung 10 spezifizieren. Die Installationsdaten beinhalten insbesondere Bilddaten, in denen die vorläufige Lage und Ausrichtung der zu installierenden wassertechnischen Einrichtung 10 angezeigt sind. Die Installationsdaten spezifizieren beispielsweise die Lage des Installationsorts (Bilddaten, GPS), die zur Installation notwendigen Bauarbeiten (Bohrungen, Wand- und Bodenöffnungen oder dergleichen) und/oder die zu installierende wassertechnische Einrichtung 10 hinsichtlich Typ, Ausführung und Abmessungen.

Im Schritt C5 werden die Installationsdaten insbesondere über geeignete Schnittstellen bereitgestellt. Dies beinhaltet insbesondere die Bereitstellung der Bilddaten, die die vorläufige Lage und Ausrichtung der zu installierenden wassertechnischen Einrichtung 10 zeigen. Derartige Bilddaten werden beispielsweise zum Download bereitgestellt, so dass eine mit dem Einbau der wassertechnischen Einrichtung 10 betraute Person diese auf sein Mobilgerät, insbesondere Mobiltelefon oder Tablett, laden kann. In anderen Fällen werden derartige Bilddaten auf das Mobilgerät der mit dem Einbau der wassertechnischen Einrichtung 10 betrauten Person automatisch übermittelt. Installationsdaten, die insbesondere die Beschaffenheit und Dimensionierung der einzubauenden Bauteile, insbesondere der wassertechnischen Einrichtung 10, die entsprechende Baustelle, den entsprechenden Installationsort (GPS), Kundenbezeichnungen, Preis, Lieferzeit oder produktionsrelevante Daten betreffen, können beispielsweise im Schritt C5 den zuständigen Geschäftseinheiten, insbesondere im Rahmen eines entsprechenden Ressourcensystems, beispielsweise im Rahmen eines EPR-Systems (EPR: Enterprise-Ressource-Planning) oder im Rahmen eines Produktdatenmanagementsystems, über eine oder mehrere geeignete Schnittstellen zur Verfügung gestellt werden.

In Ausgestaltung umfasst das Verfahren zur Bestimmung der Installationsdaten betreffend die in Fig. 1 exemplarisch illustrierte Situation zumindest einen, vorzugsweise mehrere der folgenden Verfahrensschritte:
Im Schritt B1 werden die Marker 12a1, 12a2, 12c1, 12c2,12b vor der Messung ausgedruckt, ausgelegt und zumindest zum Teil hinsichtlich ihrer Lage erfasst.

Zur Auswertung, insbesondere im Schritt C3, erfolgt eine Messung des jeweiligen Abstandes des Mobilgerätes 22 zu den Markern 12a1, 12b mit Hilfe der bekannten Größe der Marker im Vergleich zur Größe ihrer Abbilder im Mobilgerät 22.

Zur Auswertung, insbesondere im Schritt C3, erfolgt eine rechnerische Ermittlung der relativen Lage der Marker 12a1, 12b zum Mobilgerät 22 anhand der optischen Verzerrung der Abbilder der beiden Marker 12a1, 12b.

Zur Auswertung, insbesondere im Schritt C3, erfolgt eine rechnerische Ermittlung der relativen Lage der Marker (12a1, 12b).

Anschließend wird, insbesondere in einem zusätzlichen Schritt B1, das Mobilgerät 22 in Richtung des Markers 12b bewegt, so dass der Marker 12b und der Marker 12a2 im Erfassungsbereich des Mobilgerätes 22 liegen. Die optisch erfassten Bilddaten werden insbesondere in einem weiteren Schritt C1 eingelesen.

Zur Auswertung, insbesondere in einem weiteren Schritt C3, erfolgt eine Messung des jeweiligen Abstandes des Mobilgerätes 22 zu den Markern 12b und 12a2 mit Hilfe der bekannten Größe der Marker im Vergleich zur Größe ihrer Abbilder im Mobilgerät.

Zur Auswertung, insbesondere in einem weiteren Schritt C3, erfolgt eine rechnerische Ermittlung der relativen Lage der Marker (12b, 12a2) zum Mobilgerät 22 anhand der optischen Verzerrung der Abbilder der beiden Marker (12b, 12a2).

Zur Auswertung, insbesondere in einem weiteren Schritt C3, erfolgt eine rechnerische Ermittlung der relativen Lage der Markern (12b, 12a2).

Diese Verfahrensschritte werden gegebenenfalls wiederholt, d. h. bei der Lagemessung der Marker 12a1, 12c1 bzw. der Marker 12a2, 12c2 wird analog verfahren.

Bei der Ermittlung der Installationsdaten, insbesondere im Schritt C4 werden die Positionen der Marker durch ihre relative Lage zueinander berechnet.

## Patentansprüche

1. Computerimplementiertes Verfahren zum Bestimmen von Installationsdaten betreffend die Lage zumindest einer zu installierenden wassertechnischen Einrichtung (10), umfassend zumindest die folgenden Schritte (C1, C2, C3, C4, C5):
- Einlesen von optischen Bilddaten, wobei in den eingelesenen Bilddaten zumindest eine Position eines optisch codierten Markers (12, 12a, 12b, 12c) im Raum erfasst ist;
- Zuordnen der von dem zumindest einen optisch codierten Marker (12, 12a1, 12a2, 12b, 12c1, 12c2) codierten Information anhand der eingelesenen Bilddaten derart, dass die Position des zumindest einen optisch codierten Markers (12, 12a1, 12a2, 12b, 12c1, 12c2) einer Installationsposition der zumindest einen zu installierenden wassertechnischen Einrichtung (10) zugeordnet wird;
- Auswerten der eingelesenen Bilddaten unter Berücksichtigung der dem zumindest einen optisch codierten Marker (12a1, 12a2, 12b, 12c1, 12c2) zugeordneten Information;
- Ermitteln von Installationsdaten anhand der Auswertung der Bilddaten, wobei die Installationsdaten Lage, Typ, Ausführung und Abmessungen der zumindest einen zu installierenden wassertechnischen Einrichtung (10) charakterisieren;
- Bereitstellen der Installationsdaten, insbesondere über eine Schnittstelle.

2. Computerimplementiertes Verfahren nach Anspruch 1, wobei in den eingelesenen Bilddaten Positionen von mehreren optisch codierten Markern (12a1, 12a2, 12b, 12c1, 12c2) im Raum erfasst sind und beim Zuordnen der codierten Information die Position zumindest eines weiteren optisch codierten Markers (12a1, 12a2, 12b, 12c1, 12c2) einer weiteren Installationsposition der zumindest einen zu installierenden wassertechnischen Einrichtung (10) zugeordnet wird oder einer Bezugsposition im Raum zugeordnet wird, wobei insbesondere in einem Schritt mindestens zwei Marker gleichzeitig hinsichtlich ihrer Lage und ihrem Abstand zu einem zur Erfassung der Bilddaten ausgebildeten Mobilgerät (22) ausgewertet werden.

3. Computerimplementiertes Verfahren nach Anspruch 1 oder 2, wobei das Zuordnen der codierten Information unter Anwendung von Bilderkennung, insbesondere unter zumindest teilweiser Segmentierung der eingelesenen Bilddaten, erfolgt.

4. Computerimplementiertes Verfahren nach einem der vorhergehenden Ansprüche, wobei die ermittelten Installationsdaten zumindest eine vorläufige Lage der zumindest einen zu installierenden wassertechnischen Einrichtung (10) charakterisieren und diese ermittelten Installationsdaten zur Ausgabe auf einer Anzeigeeinheit, insbesondere Display, insbesondere über die Schnittstelle, bereitgestellt werden.

5. Computerimplementiertes Verfahren nach einem der vorhergehenden Ansprüche, wobei zusätzlich zu den optischen Bilddaten Einbauparameter, insbesondere benutzerseitig vorgegebene oder Einbauparameter, eingelesen werden und das Auswerten der eingelesenen Bilddaten unter Berücksichtigung der Einbauparameter und eines Planungsmodells dergestalt erfolgt, dass die eingelesenen Bilddaten und/oder die Einbauparameter anhand des Planungsmodells auf Korrektheit und/oder Vollständigkeit überprüft werden.

6. Computerimplementiertes Verfahren nach Anspruch 5, wobei im Falle von fehlenden und/oder inkorrekten Informationen korrigierte Bilddaten und/oder korrigierte Einbauparameter und/oder zusätzlich spezifizierte Einbauparameter angefordert und eingelesen werden.

7. Computerprogrammprodukt mit einem computerlesbaren Speichermedium, welches Instruktionen enthält, die, wenn diese von einer Rechnereinheit ausgeführt werden, die Durchführung eines Verfahrens nach einem der vorhergehenden Ansprüche bewirkt.

8. System zum Bestimmen von Installationsdaten betreffend die Lage zumindest einer zu installierenden wassertechnischen Einrichtung (10), umfassend zumindest eine Rechnereinheit mit einem Computerprogrammprodukt nach Anspruch 7, zumindest einen optisch kodierten Marker (12, 12a, 12b, 12c) und eine optische Erfassungseinheit (20), insbesondere eines Mobilgeräts (22), zum Erfassen der Lage des zumindest einen optisch kodierten Markers (12, 12a, 12b, 12c) im Raum.

9. System nach Anspruch 8, wobei zusätzlich eine Benutzerschnittstelle, insbesondere eines Mobilgeräts (22), zur benutzerseitigen Kommunikation mit der Rechnereinheit vorgesehen ist.

10. System nach Anspruch 8 oder 9, wobei zusätzlich eine Anzeigeeinheit (24), insbesondere eines Mobilgeräts (22), beispielsweise zum Anzeigen einer vorläufigen Lage der zumindest einen zu installierenden wassertechnischen Einrichtung (10), vorgesehen ist, wobei die Anzeigeeinheit in Kommunikation mit der Rechnereinheit steht.

## Claims

1. A computer-implemented method for determining installation data related to the position of at least one water-engineering facility (10) to be installed, comprising at least the following steps (C1, C2, C3, C4, C5):
- reading optical image data, wherein in the read image data, at least one position of an optically coded marker (12, 12a, 12b, 12c) is detected in the space;
- associating the information coded by the at least one optically coded marker (12, 12a1, 12a2, 12b, 12c1, 12c2) by means of the read image data such that the position of the at least one optically coded marker (12, 12a1, 12a2, 12b, 12c1, 12c2) is associated to an installation position of the at least one water-engineering facility (10) to be installed;
- evaluating the read image data while considering the information associated to the at least one optically coded marker (12a1, 12a2, 12b, 12c1, 12c2);
- determining installation data by means of the evaluation of the image data, wherein the installation data characterize the position, type, design and dimensions of the at least one water-engineering facility (10) to be installed;
- providing the installation data, in particular via an interface.

2. The computer-implemented method according to claim 1, wherein in the read image data, positions of several optically coded markers (12a1, 12a2, 12b, 12c1, 12c2) in the space are recorded, and when associating the coded information, the position of at least one further optically coded marker (12a1, 12a2, 12b, 12c1, 12c2) is associated to a further installation position of the at least one water-engineering facility (10) to be installed, or is associated to a reference position within the space, wherein in particular in one step at least two markers are concurrently evaluated with respect to their position and their distance from a mobile device (22) configured for recording the image data.

3. The computer-implemented method according to claim 1 or 2, wherein the associating of the coded information while applying image recognition is in particular performed while the read image data are at least partially segmented.

4. The computer-implemented method according to any one of the preceding claims, wherein the determined installation data characterize at least a preliminary position of the at least one water-engineering facility (10) to be installed, and these determined installation data are provided for being output on a displaying unit, in particular a display, in particular via the interface.

5. The computer-implemented method according to any one of the preceding claims, wherein, in addition to the optical image data, installation parameters, in particular installation parameters predefined by the user or installation parameters are read, and the evaluation of the read image data is performed while considering the installation parameters and a planning model such that the read image data and/or the installation parameters are checked for correctness and/or completeness by means of the planning model.

6. The computer-implemented method according to claim 5, wherein in the case of lacking and/or incorrect information, corrected image data and/or corrected installation parameters and/or additionally specified installation parameters are requested and read.

7. A computer-program product having a computer-readable storage medium containing instructions which, when these are executed by a computing unit, cause a method according to any one of the preceding claims to be executed.

8. A system for determining installation data related to the position of at least one water-engineering facility (10) to be installed, comprising at least one computing unit having a computer program product according to claim 7, at least one optically coded marker (12, 12a, 12b, 12c), and an optical detection unit (20), in particular a mobile device (22), for detecting the position of the at least one optically coded marker (12, 12a, 12b, 12c) in the space.

9. A system according to claim 8, wherein in addition a user interface, in particular of a mobile device (22), is provided for the user-side communication with the computing unit.

10. The system according to claim 8 or 9, wherein in addition a displaying unit (24), in particular of a mobile device (22), is provided, for example, for displaying a preliminary position of the at least one water-engineering facility (10) to be installed, wherein the displaying unit is in communication with the computing unit.

## Revendications

1. Procédé implémentable par ordinateur pour déterminer des données d'installation concernant l'emplacement d'au moins un dispositif hydrotechnique (10) à installer, comprenant au moins les étapes (C1, C2, C3, C4, C5) suivantes :
- lecture de données d'image optiques, sachant qu'au moins une position d'un marqueur (12, 12a, 12b, 12c) codé optiquement dans l'espace est saisie dans les données d'image lues ;
- attribution des informations codées par l'au moins un marqueur (12, 12a1, 12a2, 12b, 12c1, 12c2) codé optiquement à l'aide des données d'image lues de telle manière que la position de l'au moins un marqueur (12, 12a1, 12a2, 12b, 12c1, 12c2) codé optiquement soit attribuée à une position d'installation de l'au moins un dispositif hydrotechnique (10) à installer ;
- évaluation des données d'image lues compte tenu des informations attribuées à l'au moins un marqueur (12a1, 12a2, 12b, 12c1, 12c2) codé optiquement ;
- détermination de données d'installation à l'aide de l'évaluation des données d'image, sachant que les données d'installation caractérisent l'emplacement, le type, l'exécution et les dimensions de l'au moins un dispositif hydrotechnique (10) à installer ;
- mise à disposition des données d'installation, en particulier via une interface.

2. Procédé implémentable par ordinateur selon la revendication 1, sachant que des positions de plusieurs marqueurs (12a1, 12a2, 12b, 12c1, 12c2) codés optiquement dans l'espace sont saisies dans les données d'image lues et, lors de l'attribution des informations codées, la position d'au moins un marqueur (12a1, 12a2, 12b, 12c1, 12c2) codé optiquement supplémentaire est attribuée à une position d'installation supplémentaire de l'au moins un dispositif hydrotechnique (10) à installer ou est attribuée à une position de référence dans l'espace, sachant qu'en particulier en une étape au moins deux marqueurs sont évalués en même temps eu égard à leur emplacement et leur distance par rapport à un appareil mobile (22) constitué pour saisir les données d'image.

3. Procédé implémentable par ordinateur selon la revendication 1 ou 2, sachant que l'attribution des informations codées est effectuée en utilisant une détection d'image, en particulier en segmentant au moins partiellement les données d'image lues.

4. Procédé implémentable par ordinateur selon l'une des revendications précédentes, sachant que les données d'installation déterminées caractérisent au moins un emplacement provisoire de l'au moins un dispositif hydrotechnique (10) à installer et ces données d'installation déterminées sont mises à disposition pour être sorties sur une unité d'affichage, en particulier un afficheur, en particulier via une interface.

5. Procédé implémentable par ordinateur selon l'une des revendications précédentes, sachant qu'en plus des données d'image optiques, des paramètres de montage, en particulier des paramètres de montage spécifiés par un utilisateur ou des paramètres de montage, sont lus et l'évaluation des données d'image lues est effectuée compte tenu des paramètres de montage et d'un modèle de planification de telle manière que les données d'image lues et/ou les paramètres de montage sont vérifiés à l'aide du modèle de planification en termes d'exactitude et/ou d'exhaustivité.

6. Procédé implémentable par ordinateur selon la revendication 5, sachant qu'en cas d'informations manquantes et/ou incorrectes, des données d'image corrigées et/ou des paramètres de montage corrigés et/ou des paramètres de montage spécifiés en plus sont requis et lus.

7. Produit programme d'ordinateur comportant un support de stockage lisible par ordinateur, lequel contient des instructions qui, lorsqu'elles sont exécutées par une unité d'ordinateur, provoque l'exécution d'un procédé selon l'une des revendications précédentes.

8. Système pour déterminer des données d'installation concernant l'emplacement d'au moins un dispositif hydrotechnique (10) à installer, comprenant au moins une unité d'ordinateur avec un produit programme d'ordinateur selon la revendication 7, au moins un marqueur (12, 12a, 12b, 12c) codé optiquement et une unité de saisie optique (20), en particulier d'un appareil mobile (22), pour saisir l'emplacement de l'au moins un marqueur (12, 12a, 12b, 12c) codé optiquement dans l'espace.

9. Système selon la revendication 8, sachant qu'en outre une interface utilisateur, en particulier d'un appareil mobile (22), est prévue pour la communication côté utilisateur avec l'unité d'ordinateur.

10. Système selon la revendication 8 ou 9, sachant qu'en outre une unité d'affichage (24), en particulier d'un appareil mobile (22), est prévue par exemple pour afficher un emplacement provisoire de l'au moins un dispositif hydrotechnique (10) à installer, sachant que l'unité d'affichage est en communication avec l'unité d'ordinateur.
